# EUROPEAN PATENT APPLICATION

(11) **EP 4 387 237 A1**
(43) Date of publication of application: **19.06.2024**
(21) Application number: 22215008.8
(22) Date of filing: 20.12.2022
(51) Int. Cl.: H04N 21/234, H04N 21/44, H04N 21/84, H04N 21/8549, H04N 21/845

(54) **METHOD AND SYSTEM FOR MANAGING VIDEO STREAMING EVENT BOOKMARKS**

(30) Priority: 16.12.2022 PT 2022118404
(71) Applicant: NOS Inovação, S.A., 4460-191 Senhora da Hora (PT)
(72) Inventor: PINTO SEQUEIRA DOS SANTOS GRAÇA, JORGE FILIPE, 4460-191 SENHORA DA HORA (PT); NUNES FERREIRA, JOÃO MIGUEL, 4460-191 SENHORA DA HORA (PT); FERREIRA MARTINS, CARLOS MANUEL, 4460-191 SENHORA DA HORA (PT); DAVID RECHENA, PEDRO MIGUEL, 4460-191 SENHORA DA HORA (PT); PIMENTEL FERNANDES MAIO, CAROLINA, 4460-191 SENHORA DA HORA (PT); PRETO XAVIER, TIAGO FRANCISCO, 4460-191 SENHORA DA HORA (PT); SOARES CAPITÃO, PEDRO MIGUEL, 4460-191 SENHORA DA HORA (PT); RODRIGUES FERREIRA MELO, ORLANDO DUARTE, 4460-191 SENHORA DA HORA (PT); SOUSA ROSA DA CRUZ FERNANDES, BRUNO DE, 4460-191 SENHORA DA HORA (PT)
(74) Representative: do Nascimento Gomes, Rui

(57) **Abstract**

It is described a computer implemented method for managing video streaming event bookmarks. The management carried out is reflected both in terms of bookmark generation and storage and its subsequent availability to a user, in an organized manner. In this way, it is possible to process the bookmarks of all the video streaming events to be transmitted, in different channels, some simultaneously, guaranteeing an optimization of data traffic over the network infrastructure.

## Description

### FIELD OF THE APPLICATION

The present application relates to mechanisms for managing video bookmarks for video streaming events, such as sporting events.

### PRIOR ART

The proliferation of subscription television programming, the increasing number of available channels, and the corresponding increase in television programming have led to continued development of various features and capabilities of client devices and broadcast services.

Real time streaming, recording, and playback of videos have become more and more prevalent. However, viewing videos have historically been a passive experience between a user and the viewing interface. For instance, a user may typically push a play button to view an entire video to discover relevant content that interests the user. The time spent viewing an entire video may amount to countless hours of unproductive and wasted time viewing material not pertinent to the user. Moreover, constant video streaming by multiple users may place a heavy burden on the network infrastructure of the content providers. Thus, improvements have been made to improve the efficiency of the viewing experience.

A user may avoid re-watching an entire video or randomly predict the location of relevant clips by bookmarking relevant segments of the video during the viewing process. The bookmarks may enable a user to playback and save the relevant segments for viewing at a later date. Moreover, users may use bookmarks generated by an administrator to track, playback, and direct a user to relevant sections of a video. The administrator may attempt to set bookmarks where the administrator believes to be important junctures of a video. An example of administrator bookmarks are the different chapters used to divide a movie encoded on a blue-ray disc or digital video disc (DVD). Although improvements have been for users to effectively view videos, the improvements fall short in providing a user an interactive interface that automatically bookmarks videos in real-time, and thus maximizes a user's time and reduces data traffic over a network infrastructure.

The present solution intended to innovatively overcome such issues.

### SUMMARY OF THE APPLICATION

It is therefore an object of the present application a computer implemented method for managing video streaming event bookmarks. The management carried out is reflected both in terms of bookmark generation and storage and its subsequent availability to an user, in an organized manner. In this way, it is possible to process the bookmarks of all the video streaming events to be transmitted, in different channels, some simultaneously, guaranteeing an optimization of data traffic over the network infrastructure.

It is also an object of the present invention a system for managing video streaming events.

### DESCRIPTION OF FIGURES

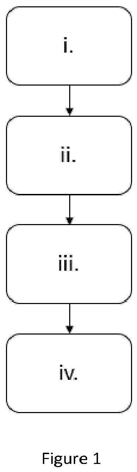

Figure 1 - representation of an embodiment of the method described in the present application, wherein the reference signs represent:
i. method step for obtaining information about a video streaming event to be broadcast from a broadcaster;
ii. method step for generating event's content-metadata and event's time-metadata;
iii. method step for generating event's bookmarks based on the timestamps of the respective generated content-metadata and/or time-metadata; and
iv. method step for storing the event's bookmark in a bookmarks database.

### DETAILED DESCRIPTION

The more general and advantageous configurations of the present application are described in the Summary section. Such configurations are detailed below in accordance with other advantageous and/or preferred embodiments of implementation of the method and system herein described.

The present application relates to a computer implemented method for managing video streaming event bookmarks. In the context of the present application, the term 'managing' shall be interpreted in a comprehensive way and as encompassing at least the actions related to the stages of generation, compilation, storage and provision of respective event's bookmarks to a user.

However, the generation of bookmarks is not, in itself, the object of the present application, and it may be carried out using video processing modules that, by implementing video indexing and browsing techniques already known from the state of the art, are adapted for this purpose.

In a first step of the method, information about a video streaming event is obtained, related to at least an initial time reference value.

Optionally, the event's information also relates to a final time reference value, and the initial and final time reference values define the duration of the event.

A video streaming event is an audio-visual media content program that is broadcast at a predetermine time, defined in relation to a temporal reference system. Thus, the initial time reference value represents the instant of time expected for the beginning of the event's broadcast.

The program is to be displayed on a client's device that is broadcasted from a broadcast source such as satellite, cable, internet, etc. In this context, a client device is intended to encompass set top boxes, satellite receivers, digital video recorders, and the like. A client device may also be embodied in software and/or hardware that facilitate the reception and display of events from a broadcast source of any suitable type (e.g., satellite, Internet protocol, wireless, etc.).

In a second step of the method, event's content-metadata and event's time-metadata are generated.

Event's content-metadata are generated when an occurrence is identified within the video streaming event. In the context of the present application, the term 'occurrence' refers to specific actions that takes place during an event. In the case of the event being a sports program such as a football match, examples may include a goal, an offensive transition, or any other action during the game that may represent an interest for the user.

Event's time-metadata are generated when a point of interest is detected within the video streaming event. In the context of the present application, the term 'point of interest' refers to specific temporal markers related to the event to be broadcast, and which, therefore, are defined in relation to the initial time reference value of the respective event. In the case of the event being a sports program such as a football match, examples may the beginning and end of the match's first half or the beginning and end of the match's second half.

The generated metadata contains a timestamp associated to a frame or set of frames of the video streaming event, that identifies a particular temporal location within said event where the occurrence is identified and the point-of-interest is detected. The term 'temporal location' relates to an event's specific instant of time that is expressed in relation to the temporal reference system.

In one embodiment, the particular location is defined as a function of the event's initial time reference value, being the time elapsed since the initial time reference value.

Particularly, in one embodiment, an occurrence and a point of interest are related to temporal locations within the initial and final time reference values that define the duration of an event.

In a third step of the method, it is generated at least one event's bookmark based on the timestamps of the respective generated content-metadata and/or time-metadata.

By interpreting the type of action in the event, i.e. whether it is an occurrence or a point of interest, has the advantage of optimizing the process of generating bookmarks, in terms of the responsiveness of the processing modules configured for this purpose, which results in a reduction in the time needed to generate them and, consequently, decreasing the delay with which bookmarks are made available to the user.

Finally, in a fourth step of the method, the generated event's bookmark is stores in a bookmarks database.

In one preferred aspect of the method, the generation of time-metadata comprises the following steps:
- determining a current time value of the event being broadcasted;
- comparing the current time value with a temporal location associated with a point of interest;
- detecting a point of interest when the current time value of the event is equal to the temporal location associated with said point of interest;
- generating a time-metadata comprising a timestamp identifying a particular location in said event corresponding to the point of interest detected.

The term "current time value" relates to a current broadcast time of the event, that is, the information about the time elapsed from the initial time reference value.

In another preferred aspect of the method, the generation of content-metadata comprises the following steps:
- training a machine learning module using a training dataset adapted for the detection of occurrences;
- supplying the video streaming event to the machine learning module to identify at least one occurrence within the event; said occurrence being related to a particular temporal location;
- generating a content-metadata comprising a timestamp identifying a particular temporal location in said event corresponding to the identified occurrence.

More particularly, an occurrence is a video characteristic, that includes information derived from motion models, optical text recognition models and/or speech recognition models, that are applied to the video streaming event.

In one preferred aspect of the method, the step of generating an event's bookmark comprises processing the video streaming event to define a video segment containing the frame or set of frames associated to the timestamp identifying a particular temporal location in said event, by identifying segment starting point and segment endpoint boundaries. More particularly, a segment starting point corresponds to a frame prior to said timestamp and a segment endpoint corresponds to a frame subsequent to said timestamp.

In another preferred aspect of the method, the bookmarks database comprises records of the events being broadcasted. More particularly, the step of storing an event's bookmark in a bookmarks database comprises associating the event's bookmark with the respective event record.

In another preferred aspect of the method, it further comprising the step of providing, through a user interface, a list of events to be transmitted and their bookmarks. In this way, it is possible to process the bookmarks of all the video streaming events to be transmitted, in different channels, some simultaneously, guaranteeing an optimization of data traffic over the network infrastructure.

The present application also relates to system for managing video streaming events bookmarks and specially adapted to implement the method already described. More particularly, the system comprises an event driven architecture, which allows to adopt an adaptable and extensible processing style, in addition to having a highly decoupled characteristic, thus being able to be used with modern distributed applications.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A computer implemented method for managing video streaming event bookmarks, comprising the following steps:
i. obtaining information about a video streaming event to be broadcast from a broadcaster; said information being related to at least an initial time reference value;
ii. generating event's content-metadata if an occurrence is identified and/or event's time-metadata if a point of interest is detected; a metadata containing a timestamp associated to a frame or set of frames of the video streaming event identifying a particular temporal location within said event where the occurrence is identified and the point-of-interest is detected;
iii. generating at least one event's bookmark based on the timestamps of the respective generated content-metadata and/or time-metadata;
iv. storing the event's bookmark in a bookmarks database.

2. The method according to claim 1, wherein the event's information also relates to a final time reference value; and wherein,
the initial and final time reference values define the duration of the event, and an occurrence and a point of interest being related to a temporal location within the initial and final time reference values.

3. The method according to claim 1 or 2, wherein the temporal location is defined as a function of the event's initial time reference value, being the time elapsed since the initial time reference value.

4. The method according to claim 3, wherein a point-of-interest is detected after a specified amount of time has elapsed from the initial time reference

5. The method according to any of the previous claims, wherein the generation of time-metadata comprises the following steps:
- determining a current time value of the event being broadcasted;
- comparing the current time value with a temporal location associated with a point of interest;
- detecting a point of interest when the current time value of the event is equal to the temporal location associated with said point of interest;
- generating a time-metadata comprising a timestamp identifying a particular location in said event corresponding to the point of interest detected.

6. The method according to any of the previous claims, wherein the generation of content-metadata comprises the following steps:
- training a machine learning module using a training dataset adapted for the detection of occurrences;
- supplying the video streaming event to the machine learning module to identify at least one occurrence within the event; said occurrence being related to a particular temporal location;
- generating a content-metadata comprising a timestamp identifying a particular temporal location in said event corresponding to the identified occurrence.

7. The method according to claim 6, wherein an occurrence is a video characteristic; the video characteristic includes information derived from:
- motion models;
- optical text recognition models; and/or
- speech recognition models;
applied to the video streaming event.

8. The method according to any of the previous claims, wherein the step of generating an event's bookmark comprises the following steps:
- processing the video streaming event to define a video segment containing the frame or set of frames associated to the timestamp identifying a particular temporal location in said event, by identifying segment starting point and segment endpoint boundaries;
wherein
a segment starting point corresponds to a frame prior to said timestamp and a segment endpoint corresponds to a frame subsequent to said timestamp.

9. The method according to any of the previous claims, wherein the video streaming event is a sporting event; particularly the sporting event is a football match.

10. The method according to claim 9, wherein a point of interest relates to:
- a temporal location of the event related to the beginning of the match's first half; and to
- a temporal location of the event related to the end of the match's first half; and to
- a temporal location of the event related to the beginning of the match's second half; and to
- a temporal location of the event related to the end of the match's second half.

11. The method according to claims 10 or 9, wherein an occurrence relates to a goal or to an offensive transition.

12. The method according to any of the previous claims, wherein the bookmarks database comprises records of the events being broadcasted; and wherein,
the step of storing an event's bookmark in a bookmarks database comprises:
- associating the event's bookmark with the respective event record.

13. The method according to claim 12, further comprising the step of:
- providing, through a user interface, a list of events to be transmitted and their bookmarks.

14. System for managing video streaming events bookmarks comprising an event driven architecture programmed to implement the method of claims 1 to 13.
